(19) Europäisches Patentamt
European Patent Office
Office européen des brevets

(11) Veröffentlichungsnummer: 0 376 051 A2

(12) **EUROPÄISCHE PATENTANMELDUNG**

(21) Anmeldenummer: 89122979.1

(22) Anmeldetag: 13.12.89

(51) Int. Cl.5: C09B 23/02, G03C 7/02, G03C 1/12

(30) Priorität: 20.12.88 DE 3842785

(43) Veröffentlichungstag der Anmeldung: 04.07.90 Patentblatt 90/27

(84) Benannte Vertragsstaaten: AT BE CH DE ES FR GB GR IT LI LU NL SE

(71) Anmelder: METEOR-SIEGEN Apparatebau Paul Schmeck GmbH
Frankfurter Strasse 27
D-5900 Siegen(DE)

(72) Erfinder: Drexhage, Karl-Heinz, Prof. Dr.
Schanzenweg 50
D-5900 Siegen(DE)
Erfinder: Drexhage, Elisabeth, geb. Plaas
Schanzenweg 50
D-5900 Siegen(DE)

(74) Vertreter: Eisenführ, Speiser & Strasse
Martinistrasse 24
D-2800 Bremen 1(DE)

(54) **Cyanin-Farbstoffe.**

(57) Die Erfindung betrifft chemische Substanzen mit Farbstoff-Eigenschaften, spezieller verbesserte Cyanin-Farbstoffe und deren Verwendung für fotografische Ausbleichverfahren. Vorzugsweise trägt dabei eine Chromyliumgruppe am Heteroring entweder eine substituierte Phenylgruppe oder eine Alkylgruppe. Insbesondere erweisen sich o-halogeniertes Phenyl und t-Butyl als vorteilhafte Substituenten.

EP 0 376 051 A2

## Cyanin-Farbstoffe

Die Erfindung betrifft chemische Substanzen mit Farbstoff-Eigenschaften, spezieller Cyanin-Farbstoffe, und die Verwendung solcher Substanzen für fotografische Ausbleichverfahren.

Die erfindungsgemäßen Substanzen entsprechen der allgemeinen Formel I

(I) 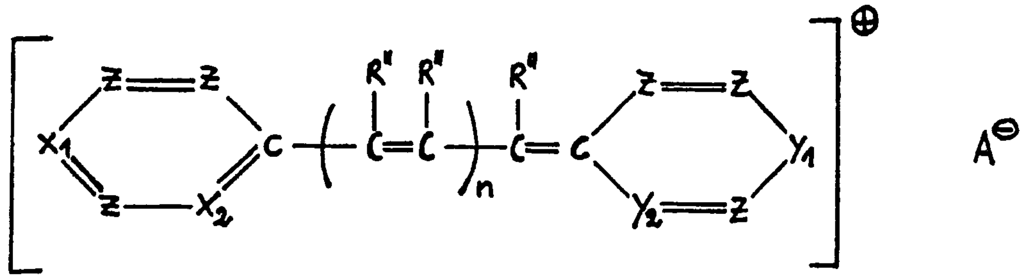

WM/sst

mit:

$X_1$ oder $X_2$ und $Y_1$ oder $Y_2$ = Sauerstoff, Schwefel, Selen oder Tellur, wobei das jeweils andere $X_2$ oder $X_1$ und $Y_2$ oder $Y_1$ (das nicht O, S, Se oder Te ist) = Z; Z = CR′ oder Stickstoff; R′, R″ = Substituent, wobei jedes R′ und R″ unabhängig von den anderen R′ und R″ ausgewählt ist aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisierter Stickstoff ($NR'''_3$ ⊕ mit ein oder mehrere R‴ ≠ H); Halogen; Sulfonsäure und Phosphonsäure, deren Derivate und Salze; und wobei zwei R′-Gruppen am selben Ring zur Bildung eines weiteren, unsubstituierten oder substituierten alizyklischen oder aromatischen Ringes miteinander verbrückt sein können;

n = 0 oder 1;

A = Anion.

Diese Substanzen lassen sich nach bekannten Verfahren herstellen. Nur als Beispiel seien genannt:

O. Riester, Dissertation Universität Bonn (1937) für n = 0;

H. Brockmann et al., Ber. dt. Chem. Ges. 77, 529 (1944) für n = 1.

Die in der Formel I mit $X_1$, $X_2$, $Y_1$ und $Y_2$ bezeichneten Heteroatome (Sauerstoff, Schwefel, Selen oder Tellur) können in den Ringpositionen 4 und 4′ stehen, wie beispielsweise bei den erfindungsgemäßen Verbindungen, die den allgemeinen Formeln II und III

(II) 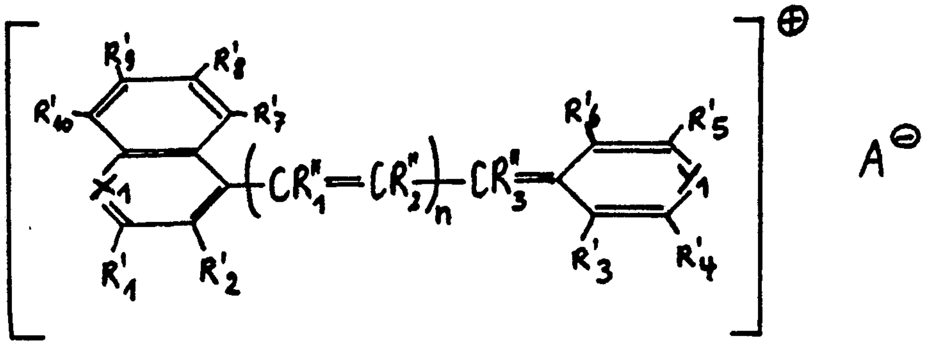

(III) 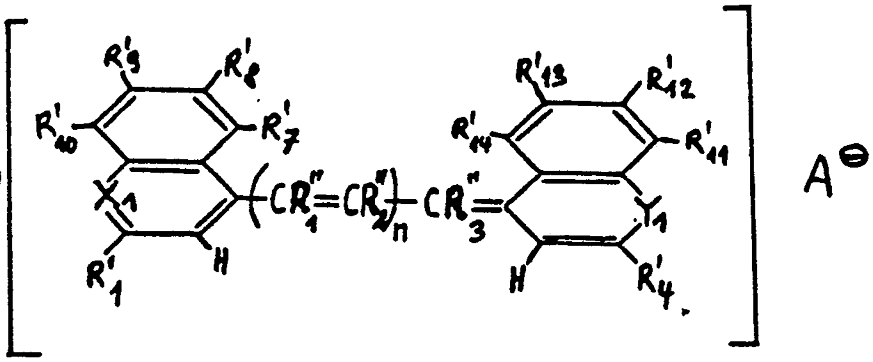

entsprechen.

Stattdessen können diese Heteroatome auch die Ringpositionen 4 und $2'$ einnehmen, wie bei den erfindungsgemäßen Verbindungen entsprechend der allgemeinen Formel IV

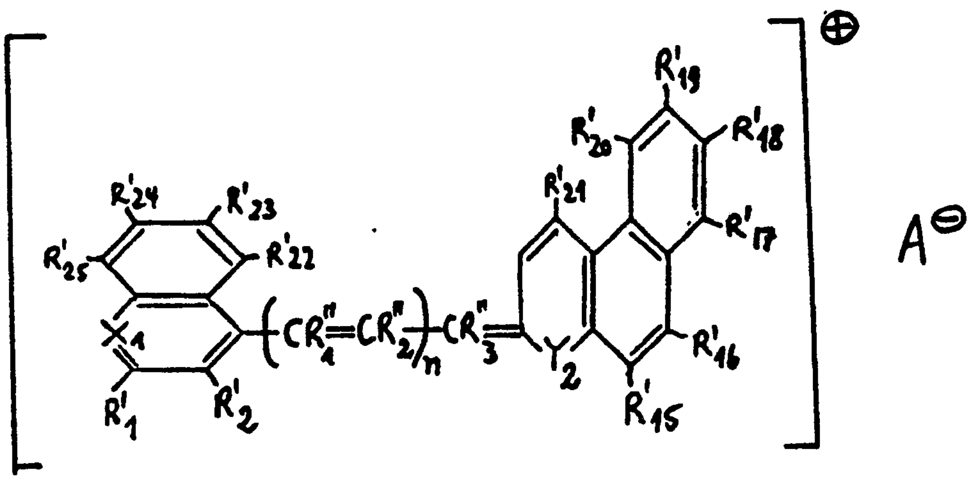

Beispiele für solche erfindungsgemäßen Verbindungen sind in der folgenden Beschreibung angegeben.

Es ist aber genauso möglich, daß die Heteroatome Sauerstoff, Schwefel, Selen und Tellur die Ringpositionen 2 und $2'$ oder 2 und $4'$ einnehmen.

In den nicht von O, S, Se oder Te besetzten Positionen 2, $2'$, 4 oder $4'$ befindet sich eine $CR'$-Gruppe oder ein Stickstoffatom.

Obwohl vorzugsweise Z in der allgemeinen Formel I die $CR'$-Gruppe bedeutet, können auch einzelne oder mehrere der Ringpositionen 3, 5 und 6 stattdessen von Stickstoffatomen besetzt sein. Auch diese Substanzen lassen sich nach bekannten Verfahren synthetisieren und eignen sich als Ausbleich-Farbstoffe, so beispielsweise folgende Verbindung:

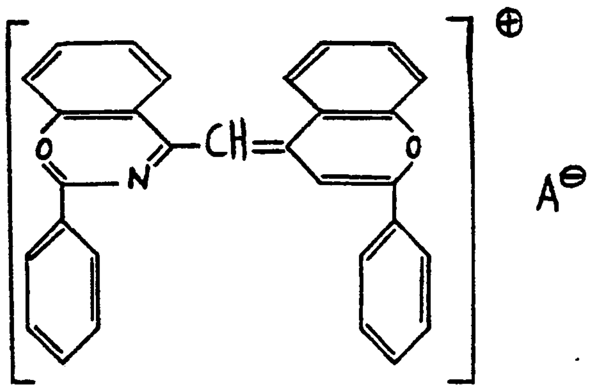

mit λmax = 548 nm.

Vorzugsweise ist eine oder mehrere der $R''$-Gruppen gemäß Formeln I bis IV Wasserstoff, jedoch ergeben sich stabile Verbindungen mit guten Ausbleicheigenschaften auch für den Fall, daß eine oder mehrere der $R''$-Gruppen beispielsweise substituiertes Phenyl, t-Alkyl, Carboxyl, $CF_3$ oder CN ist. Wegen der sterischen Bedingungen an der Mono- bzw. Trimethinkette können keine allzusehr raumbeanspruchenden Substituenten als $R''$-Gruppe eingesetzt werden, insbesondere wenn bei einer Trimethinkette alle drei Kohlenstoffatome der Kette eine $R''$-Gruppe tragen sollen, die nicht Wasserstoff ist.

Generell läßt sich sagen, daß Substituenten mit vorteilhaften Auswirkungen auf die erfindungsgemäßen Farbstoffeigenschaften jede $R'$- und $R''$-Gruppe bilden können.

Einzelne den beigefügten Ansprüchen unterfallende Substanzen sind bereits bekannt geworden und werden daher ausdrücklich nicht als solche beansprucht.

Aus "Khimiya Geterotsiklicheskikh Soedinenii" 1983 (3), 304-308 sind Cyanin-Farbstoffe bekannt, die der Formel A entsprechen,

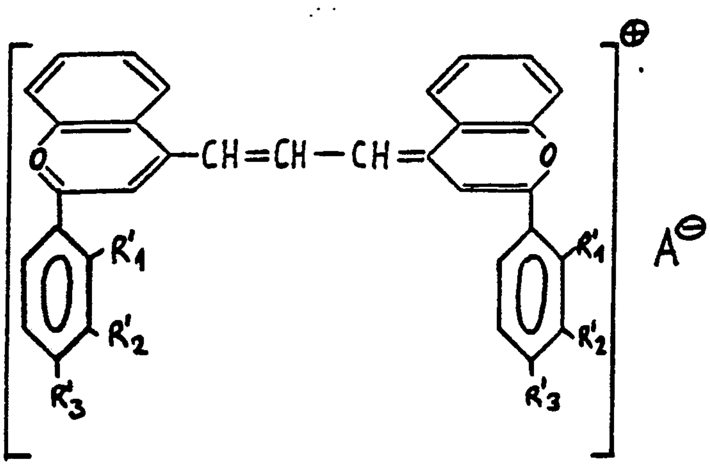

(A)

wobei $R'_1$, $R'_2$ und $R'_3$ gleichzeitig H sein können oder aber $R'_1$ oder $R'_2$ oder $R'_3$ = $-OCH_3$ sein kann oder aber $R'_1$ = -OH ist. In dieser Vorveröffentli chung werden Ausbleicheigenschaften solcher Farbstoffe nicht untersucht.

Cyanin-Farbstoffe mit Chromylium- bzw. Thiachromylium-Gruppen sind außerdem aus diversen Patenten der Eastman Kodak Company als solche bekannt, die im folgenden noch diskutiert werden.

Bereits um 1900 wurde erstmals vorgeschlagen, Farbfotografien durch selektives Ausbleichen einzelner Farbstoffe eines Gemisches zu erzeugen. Trotz der bemerkenswerten Einfachheit eines solchen Verfahrens hat dieses aber bis heute keine praktische Bedeutung erlangt, obwohl in N-Allylthioharnstoff schon frühzeitig ein geeigneter Sensibilisator zur Verfügung stand, der durch Wässern leicht zu entfernen ist und so das Fixieren des Bildes ermöglicht.

Die hauptsächliche Schwierigkeit bestand darin, daß die bekannten Farbstoffe zu langsam ausbleichen und farbige, insbesondere gelbbraune Rückstände hinterlassen.

Die aus der DE-OS 29 03 287 und der US-PS 4,247,799 der Eastman Kodak Company bekannten Farbstoffe sind zur Herstellung von Farbfotografien bzw. Farbkopien wenig geeignet, da insbesondere die

schnell ausbleichenden Farbstoffe beim Ausbleichen einen starken gelbbraunen Rückstand hinterlassen. Dadurch werden die Farben verzerrt wiedergegeben, insbesondere erscheinen eigentlich weiße Bildbereiche in gelbbrauner Färbung. Ein Beispiel bildet der in der US-PS 4,247,799 in Beispiel 1 als Nr. III genannte Farbstoff. Für die im genannten Stand der Technik vorgesehene Anwendung des Ausbleichverfahrens zur Herstellung von Farbfilteranordnungen für CCD's ist dieser Nachteil unerheblich, weil hier eine 100%ige Transmission nicht erforderlich ist und ein Farbrückstand praktisch nicht stört. Weitere Farbstoffe nennen die US-Patente 3,300,314 und 3,671,251 sowie das JP-Patent 61-83533 und die JP-Patentanmeldung Nr. 27781/1982.

Vor diesem Hintergrund ist es eine Aufgabe der Erfindung, neue Cyanin-Farbstoffe zu schaffen. Eine weitere Aufgabe der Erfindung besteht in der Bereitstellung solcher Farbstoffe, die bei Verwendung in fotografischen Ausbleichverfahren bei erhöhter Lichtempfindlichkeit und kurzen Ausbleichzeiten weniger farbige Rückstände hinterlassen.

Diese Aufgaben werden durch die in den unabhängigen Patentansprüchen definierten Cyanin-Farbstoffe gelöst.

Mit den erfindungsgemäßen Farbstoffen läßt sich ein gewünschter Farbton sehr genau abstimmen. Da es beim fotografischen Ausbleichverfahren - im Gegensatz zu den meisten anderen Farbfotografieverfahren - ohne weiteres möglich ist, mehr als drei Farbstoffe zu kombinieren, läßt sich durch Verwendung der erfindungsgemäßen Cyanin-Farbstoffe nebeneinander, beispielsweise durch Kombination von fünf geeignet absorbierenden erfindungsgemäßen Farbstoffen, eine bisher unerreichbar farbtreue Wiedergabe erzielen.

Die erfindungsgemäßen Farbstoffe sind strukturell den im genannten Stand der Technik beschriebenen (Thia-)chromylium-Farbstoffen verwandt. Gegenüber diesen zeichnen sie sich jedoch überwiegend durch eine - zum Teil sehr wesentlich - höhere Lichtempfindlichkeit und insbesondere dadurch aus, daß sie nach dem Ausbleichen nur einen verminderten oder gar keinen wahrnehmbaren Rückstand hinterlassen. Der bei den bekannten Farbstoffen unvermeidliche Farbschleier fehlt bei Einsatz der besten erfindungsgemäßen Farbstoffe fast völlig; der im folgenden erläuterte Wert $E_\infty(450)$ = 0,01 bedeutet beispielsweise einen auch apparativ kaum noch meßbaren Rückstand.

Dadurch eignen sich die erfindungsgemäßen Farbstoffe zur Erzeugung aller farbigen Abbildungen u. a. zum Einsatz bei solchen Anwendungen wie color proofing bei der Herstellung von Druckplatten, Herstellung von Farbfiltereinrichtungen, Monochrom-Kopien in fast beliebigen Farben, und insbesondere für die Herstellung von Farbkopien von fotografischer Qualität. Die erfindungsgemäßen Farbstoffe eignen sich auch zum Ersatz der Farbstoffe des Diazoverfahrens mit dem Vorteil, daß der dort auftretende, störende Ammoniakgeruch entfällt.

Die aus den genannten Eastman Kodak-Vorveröffentlichungen bekannten Farbstoffe entsprechen den allgemeinen Formeln II bzw. III mit $X_1$, $Y_1$ = Sauerstoff, $R'_2$, $R'_3$, $R'_6$ und $R'_7$ - $R'_{14}$ = Wasserstoff und $R''1$ - $R''3$ = Wasserstoff.

Bei den bekannten Monomethincyaninen (n = 0) sind $R'_1$ und $R'_4$ (Formel III) bzw. $R'_1$, $R'_4$ und $R'_5$ - (Formel II) unsubstituiertes Phenyl. Die genannten Veröffentlichungen nennen als einzigen Trimethin-Farbstoff (n = 1) eine Verbindung mit zwei Pyryliumgruppen. Diese bekannten Stoffe werden als solche nicht beansprucht.

Ohne die Erfindung auf irgendeine Theorie beschränken zu wollen, wird gegenwärtig angenommen, daß von wesent licher Bedeutung für die Überlegenheit der erfindungsgemäßen Farbstoffe die sterischen Verhältnisse bei der Substitution am Ring sind. Anscheinend ist es besonders vorteilhaft, bei Phenylsubstitution am Ring raumfüllende und möglichst auch elektronenziehende funktionelle Gruppen in einer oder beiden ortho-Stellungen am Phenylring vorzusehen. Bestimmte Gruppen wie beispielsweise $CF_3$ sind in fast beliebiger Stellung am Phenylring vorteilhaft. Alternativ läßt sich statt einer Phenylgruppe eine Alkyl-, insbesondere t-Butylgruppe einsetzen.

Auch erweisen sich -COOH- und -COOR-Gruppen als Substituenten (statt Phenyl und Alkyl) als sehr vorteilhaft. Die bevorzugten Substituenten erweisen sich zudem auch dann als vorteilhaft, wenn sie an eine Methingruppe gebunden sind.

Da über den Verlauf der fotochemischen Ausbleichreaktion bislang nichts Näheres bekannt ist, lassen sich die erfindungsgemäß erreichbaren Effekte nicht mit Sicherheit theoretisch auf einzelne Parameter des Substitutionsmusters zurückführen. Im Stand der Technik finden sich für die erfindungsgemäß erreichbaren Effekte keinerlei Hinweise.

Im folgenden werden verschiedene Versuche zum Vergleich der bekannten mit erfindungsgemäßen Farbstoffen im einzelnen beschrieben.

Bekannte und erfindungsgemäße Farbstoffe wurden nach einschlägigen bekannten Verfahren synthetisiert, nachfolgend wurden ihre Absorptionsmaxima ($\lambda$max) in verdünnter Lösung in 1,2-Dichlorethan gemessen.

Die Lichtempfindlichkeit und die Menge an farbverfälschenden Ausbleichrückständen wurde folgendermaßen bestimmt:

In 1 Liter Methylglykol wurden 100 g Celluloseacetat-hydrogenphthalat, 40 g Polyethylenglykol mit einem mittleren Molekulargewicht von 2000, ca. 2 g des jeweiligen Farbstoffs und 40 g N-Allyl-N′-(hydroxyethyl)thioharnstoff gelöst. Diese Lösung wurde mit einem Rakel auf einer Polyesterfolie zu einem 0,1 mm dicken Film ausgestrichen. Nach dem Verdunsten des Lösungsmittels hatte der so erzeugte lichtempfindliche Film eine Stärke von etwa 20 µm. Die jeweilige Farbstoffmenge wurde dabei stets so gewählt, daß der Film beim Absorptionsmaximum eine optische Dichte im Bereich 1,8 bis 2,2 hatte.

Der Film wurde dann mit einer 150 Watt Halogenlampe durch ein IR-absorbierendes Filter belichtet. Die Zeit t, in der die optische Dichte am Absorptionsmaximum vom Wert 2,0 auf den Wert 1,0 abgesunken war, wurde bestimmt. Damit bedeutet in den folgenden Tabellen ein kleinerer Wert t stets eine entsprechend höhere Lichtempfindlichkeit. "t" ist in den Tabellen nur eine relative Größe und kann, je nach Belichtungsbedingungen, Minuten oder Sekunden bedeuten.

Nach vollständigem Ausbleichen des Farbstoffs wurde die dann noch vorhandene, nicht mehr ausbleichbare Färbung spektralfotometrisch vermessen. So wurde eine verbliebene optische Dichte bei einer Wellenlänge von 450 nm bestimmt, die in den Tabellen als "$E_\infty(450)$" angegeben ist. Dieser Wert ist ein gutes Maß für die Stärke des Gelbtons nach der vollständigen fotochemischen Zerstörung eines Farbstoffs; im Idealfall (kein verbleibender Gelbton) ist $E_\infty(450) = 0$.

Zunächst wurden die in Tabelle 1 aufgeführten Proben mit den Nummern 1 bis 28 überprüft. Probe 1 ist ein bekannter Eastman Kodak-Farbstoff, gemäß der allgemeinen Formel III, mit $X_1$ und $Y_1$ = Sauerstoff, $R'_1$ und $R'_4$ = unsubstituiertes Phenyl, alle anderen $R'$ und alle $R''$ = Wasserstoff.

Auch die Proben 2 bis 28 entsprechen der allgemeinen Formel III, mit $X_1$, $Y_1$ = Sauerstoff; $R'_1$ $R'_4$ = Phenyl, alle anderen $R'$ und alle $R''$ = Wasserstoff und n = 0. Wie aus der Tabelle I ersichtlich ist, wurden verschiedenartige Substitutionen an der Phenylgruppe $R'_1$ getestet, teilweise kombiniert mit ähnlichen Substitutionen an der Phenylgruppe $R'_4$.

Tabelle 1

| Probennummer | Substitution an $R'_1$ (= Phenyl) | | | | | Substitution an $R'_4$ (= Phenyl) | | | | | λmax | t | E∞(450) |
|---|---|---|---|---|---|---|---|---|---|---|---|---|---|
| | (o) | (m) | (p) | (m) | (o) | (o) | (m) | (p) | (m) | (o) | [nm] | | |
| 1 | | | | | | | | | | | 603 | 20 | 0,05 |
| 2 | F | | | | | | | | | | 599 | 18 | 0,04 |
| 3 | Cl | | | | | | | | | | 592 | 17 | 0,03 |
| 4 | | Cl | | | | | | | | | 601 | 20 | 0,05 |
| 5 | Br | | | | | | | | | | 590 | 15 | 0,03 |
| 6 | I | | | | | | | | | | 588 | 15 | 0,03 |
| 7 | Cl | | | | | Cl | | | | | 582 | 12 | 0,02 |
| 8 | Cl | | | | | | | Cl | | | 595 | 18 | 0,03 |
| 9 | Br | | | | | Br | | | | | 582 | 10 | 0,02 |
| 10 | Cl | | Cl | | | | | | | | 593 | 18 | 0,04 |
| 11 | Cl | | | Cl | | | | | | | 591 | 17 | 0,03 |
| 12 | Cl | Cl | Cl | | | | | | | | 589 | 18 | 0,03 |
| 13 | Cl | | | | Cl | | | | | | 583 | 14 | 0,02 |
| 14 | Cl | | | | Cl | Cl | | | | Cl | 574 | 7 | 0,01 |
| 15 | Cl | | | | F | | | | | | 586 | 16 | 0,03 |
| 16 | Cl | | | | F | Cl | | | | Cl | 576 | 11 | 0,02 |
| 17 | | $CF_3$ | | | | | | | | | 597 | 16 | 0,06 |
| 18 | | $CF_3$ | | | | | $CF_3$ | | | | 598 | 12 | 0,06 |
| 19 | | $CF_3$ | | $CF_3$ | | | | | | | 594 | 14 | 0,07 |
| 20 | | $CF_3$ | | $CF_3$ | | | $CF_3$ | | $CF_3$ | | 604 | 10 | 0,05 |
| 21 | | CN | | | | | | | | | 601 | 20 | 0,10 |
| 22 | | | CN | | | | | | | | 607 | 25 | 0,12 |
| 23 | $NO_2$ | | | | | | | | | | 586 | 13 | 0,12 |
| 24 | | $NO_2$ | | | | | | | | | 597 | 20 | 0,08 |
| 25 | $CH_3$ | | | | | | | | | | 592 | 15 | 0,05 |
| 26 | $CH_3$ | | | | | Cl | | | | Cl | 575 | 12 | 0,04 |
| 27 | $CH_3$ | | $CH_3$ | | $CH_3$ | | | | | | 583 | 21 | 0,03 |
| 28 | $CH_3$ | | $CH_3$ | | $CH_3$ | Cl | | | | Cl | 570 | 16 | 0,02 |

Das beste Ergebnis gab Probe Nr. 14, mit einer praktisch um den Faktor 3 verkürzten Ausbleichzeit und einem um den Faktor 5 verringerten verbleibenden Gelbton. Bei diesem erfindungsgemäßen Farbstoff sind beide Phenylgruppen $R'_1$, $R'_4$ in jeweils beiden ortho-Stellungen durch Chlor substituiert.

Ebenfalls gute Ergebnisse ergab eine Brom-Substituierung jeweils einer ortho-Stellung beider Phenylgruppen $R'_1$ und $R'_4$ (Probe Nr. 9).

Die Tabelle 1a zeigt die an Proben mit den Nummern 85 bis 96 gewonnenen Ergebnisse. Diese Proben entsprachen der allgemeinen Formel III mit n = 0 und X sowie Y = Sauerstoff. Wie bei den Proben 1 bis 28 wurden $R'_1$ und $R'_4$ von Phenylgruppen gebildet; bei den Proben 87 und 88 war die Phenylgruppe $R'_1$ halogensubstituiert, während bei den Proben 85, 86 und 89 bis 96 beide Phenylgruppen $R'_1$ und $R'_4$ unsubstituiert waren. Im Unterschied zu den Proben 1 bis 28 wurden bei den Proben 85 bis 96 einer oder mehrere der Substituenten $R'_7$ bis $R'_{14}$ nicht von Wasserstoff, sondern von Halogenatomen bzw., bei Probe 96, von Methylgruppen gebildet.

Die der Probe Nr. 5 vergleichbare Probe Nr. 87 ergab bei gleicher Ausbleichzeit einen übereinstimmenden, sehr geringen verbleibenden Gelbton. Der Probe Nr. 11 ist die Probe 88 vergleichbar; sie zeigte eine etwas kürzere Ausbleichzeit bei etwas größeren Ausbleichrückständen.

Insgesamt ergaben bis auf die Methyl-substituierte Probe 96 alle Proben der Tabelle 1a kürzere Ausbleichzeiten als der bekannte Farbstoff (Probe Nr. 1) bei etwa gleichen Ausbleichrückständen.

Die Proben 90 bis 92, mit $R'_7$ = Cl, waren zu instabil für eine Bestimmung der Ausbleichzeit und des Ausbleichrückstandes.

Tabelle 1a

| Probennummer | Substitution an $R'_1$ (= Phenyl) | | | | | Weitere Substitution gemäß Formel III | | | | | | | | λmax | t | E∞(450) |
|---|---|---|---|---|---|---|---|---|---|---|---|---|---|---|---|---|
| | (o) | (m) | (p) | (m) | (o) | $R'_7$ | $R'_8$ | $R'_9$ | $R'_{10}$ | $R'_{11}$ | $R'_{12}$ | $R'_{13}$ | $R'_{14}$ | [nm] | | |
| 85 | | | | | | | Cl | | Cl | Cl | | Cl | | 627 | 10 | 0,05 |
| 86 | | | | | | | Cl | | Cl | | | | | 610 | 10 | 0,09 |
| 87 | Br | | | | | | Cl | | Cl | | | | | 593 | 15 | 0,03 |
| 88 | Cl | | | Cl | | | Cl | | Cl | | | | | 595 | 15 | 0,06 |
| 89 | | | | | | | | Cl | Cl | | | | | 607 | 15 | 0,07 |
| 90 | | | | | | Cl | Cl | | | | | | | 618 | - instabil - | |
| 91 | | | | | | Cl | | | Cl | | | | | 616 | - instabil - | |
| 92 | | | | | | Cl | Cl | Cl | | | | | | 622 | - instabil - | |
| 93 | | | | | | | Cl | | | | | | | 608 | 15 | 0,06 |
| 94 | | | | | | | Br | | | | | | | 609 | 13 | 0,06 |
| 95 | | | | | | | Br | | Br | | | | | 605 | 13 | 0,08 |
| 96 | | | | | | | $CH_3$ | | $CH_3$ | | | | | 603 | 30 | 0,05 |

Tabelle 2 zeigt die Ergebnisse weiterer Versuche mit Proben 29 bis 42 und 97 bis 101,ebenfalls Farbstoffe entsprechend der allgemeinen Formel III mit X sowie Y = Sauerstoff. Diese Farbstoffe unterscheiden sich von den Proben 1 bis 28 darin, daß sie statt einer Phenylgruppe eine Alkylgruppe oder eine Carboxylsäure- bzw. ~ester-Gruppe als Substituent $R'_1$ aufweisen; der Substituent $R'_4$ ist, ggf. substituiertes, Phenyl. Bei zwei Proben sind $R'_8$ und $R'_{10}$ = Cl.

Die t-Butylgruppe ergab als Substituent $R'_1$ gute Ergebnisse; zwar waren die Ausbleichzeiten t etwas länger, jedoch waren die verbleibenden Gelbfärbungen gegenüber dem bekannten Farbstoff mit der Probennummer 1 deutlich verringert.

Besonders gute Ergebnisse zeigten die Proben 99, 100 und insbesondere 101, mit $R'_1$ = COOH und Chlor-Substitution in beiden ortho-Stellungen der Phenylgruppe $R'_4$.

Tabelle 2

| Probennummer | $R'_1$ | Substitution an $R'_4$ (= Phenyl) | | | | | Weitere Substituenten | | λmax | t | E∞(450) |
|---|---|---|---|---|---|---|---|---|---|---|---|
| | | (o) | (m) | (p) | (m) | (o) | $R'_8$ | $R'_{10}$ | [nm] | | |
| 29 | Methyl | | | | | | | | 572 | 50 | 0,08 |
| 30 | " | Cl | | | | Cl | | | 555 | 30 | 0,05 |
| 31 | i-Propyl | | | | | | | | 573 | 40 | 0,06 |
| 32 | " | Cl | | | | Cl | | | 557 | 25 | 0,05 |
| 33 | Cyclohexyl | | | | | | | | 575 | 40 | 0,06 |
| 34 | " | Cl | | | | Cl | | | 563 | 25 | 0,05 |
| 35 | t-Butyl | | | | | | | | 574 | 30 | 0,03 |
| 36 | " | Cl | | | | | | | 565 | 25 | 0,03 |
| 37 | " | Br | | | | | | | 563 | 25 | 0,03 |
| 38 | " | Cl | | | | Cl | | | 557 | 25 | 0,03 |
| 39 | " | Cl | | | | F | | | 562 | 40 | 0,03 |
| 40 | " | $CH_3$ | | $CH_3$ | | $CH_3$ | | | 558 | 35 | 0,03 |
| 41 | I-Adamant. | | | | | | | | 577 | 60 | 0,05 |
| 42 | " | Cl | | | | Cl | | | 559 | 50 | 0,05 |
| 97 | t-Butyl | | | | | | Cl | Cl | 579 | 25 | 0,04 |
| 98 | " | Cl | | | | Cl | Cl | Cl | 570 | 22 | 0,03 |
| 99 | COOH | | | | | | | | 584 | 35 | 0,02 |
| 100 | $COOCH_3$ | | | | | | | | 580 | 30 | 0,02 |
| 101 | COOH | Cl | | | | Cl | | | 578 | 25 | 0,01 |

Eine ebenfalls sehr deutliche Verringerung im verbleibenden Gelbton ergab sich für die in Tabelle 3 angegebenen Farbstoffe, besonders ausgeprägt für $R'_1$ = $CONH_2$, vgl. Probe Nr. 103.

Die Proben 43, 102 und 103 entsprechen den Proben gemäß Tabelle 2, jedoch ist $R'_4$ t-Butyl statt Phenyl.

Tabelle 3

| Probennummer | $R'_1$ | $R'_4$ | λmax | t | E∞(450) |
|---|---|---|---|---|---|
| | | | [nm] | | |
| 43 | t-Butyl | t-Butyl | 547 | 30 | 0,02 |
| 102 | $COOCH_3$ | " | 558 | 30 | 0,02 |
| 103 | $CONH_2$ | " | 558 | 25 | 0,01 |

Tabelle 4 zeigt die Ergebnisse, die mit den Proben 44 bis 53 und 104 erhalten wurden. Diese Farbstoffe entsprechen der allgemeinen Formel III mit n = 0 und $X_1$ = Sauerstoff, jedoch $Y_1$ = Schwefel. $R'_1$ und $R'_4$ sind Phenylgruppen. Bei Proben 44 bis 53 sind alle anderen $R'$ und $R''$ = Wasserstoff; bei Probe 104 sind $R'_8$ und $R'_{10}$ = Cl, alle anderen $R'$, $R''$ = H.

Die Probennummer 44 ist ein bekannter Farbstoff, bei dem $R'_1$ und $R'_4$ unsubstituiertes Phenyl sind.

Jede Substitution der Phenylgruppe führte zu verkürzter Ausbleichzeit und verringertem Gelbton. Die kürzeste Ausbleichzeit und den geringsten verbleibenden Gelbton zeigte Probennummer 51; bei diesem Farbstoff waren wieder beide Phenylgruppen $R'_1$, $R'_4$ in beiden ortho-Stellungen chlorsubstituiert.

Tabelle 4

| Probennummer | Substitution an $R'_1$ (= Phenyl) | | | | | Substitution an $R'_4$ (= Phenyl) | | | | | λmax | t | $E_\infty(450)$ |
|---|---|---|---|---|---|---|---|---|---|---|---|---|---|
| | (o) | (m) | (p) | (m) | (o) | (o) | (m) | (p) | (m) | (o) | [nm] | | |
| 44 | | | | | | | | | | | 652 | 90 | 0,06 |
| 45 | Cl | | | | | | | | | | 639 | 55 | 0,04 |
| 46 | Cl | | Cl | | | | | | | | 641 | 65 | 0,05 |
| 47 | Br | | | | | | | | | | 638 | 50 | 0,03 |
| 48 | I | | | | | | | | | | 638 | 50 | 0,03 |
| 49 | Cl | | | | | Cl | | | | | 633 | 20 | 0,02 |
| 50 | Cl | | | | Cl | Cl | | | | | 622 | 15 | 0,02 |
| 51 | Cl | | | | Cl | Cl | | | | Cl | 606 | 12 | 0,02 |
| 52 | | $CF_3$ | | | | | | | | | 645 | 35 | 0,05 |
| 53 | | CN | | | | | | | | | 645 | 40 | 0,08 |
| 104 | | $R'_1$, $R'_4$ = unsubstituiertes Phenyl; | | | | | | | | | | | |
| | | $R'_8$, $R'_{10}$ = Cl | | | | | | | | | 653 | 50 | 0,04 |

Auch Tabelle 5 zeigt Ergebnisse an Proben 54 bis 56, entsprechend der Formel III mit n = 0, $X_1$ und $Y_1$ = Schwefel, $R'_1$ und $R'_4$ = Phenyl, alle anderen $R'$ und $R''$ = H.

Tabelle 5

| Probennummer | Substitution an $R'_1$ (= Phenyl) | | | | | Substitution an $R'_4$ (= Phenyl) | | | | | λmax | t | $E_\infty(450)$ |
|---|---|---|---|---|---|---|---|---|---|---|---|---|---|
| | (o) | (m) | (p) | (m) | (o) | (o) | (m) | (p) | (m) | (o) | [nm] | | |
| 54 | | | | | | | | | | | 700 | 100 | 0,08 |
| 55 | Cl | | | | | Cl | | | | | 684 | 80 | 0,03 |
| 56 | Br | | | | | Br | | | | | 683 | 70 | 0,03 |

Probennummer 54 ist ein zum Stand der Technik gehöriger Farbstoff mit $R'_1$ und $R'_4$ = unsubstituiertes Phenyl.

Eine Chlor- oder Brommonosubstitution in ortho-Stellung am Phenylrest ergab verkürzte Ausbleichzeiten und drastisch verringerte verbleibende Gelbwerte.

Tabelle 5a zeigt an Proben 105 und 106 gewonnene Ergebnisse. Diese Farbstoffe entsprechen wiederum der allgemeinen Formel III mit n = 0 und $R'_1$, $R'_4$ = unsubstituiertes Phenyl. $X_1$ ist Schwefel; $Y_1$ ist Sauerstoff. Bei Probe 105 ist $R'_{10}$ = Cl; bei Probe 106 ist $R'_{10}$ = Br. Alle anderen $R'$ und $R''$ sind Wasserstoff.

Tabelle 5a

| Probennr. | $R'_{10}$ | λmax | t | $E_\infty(450)$ |
|---|---|---|---|---|
| | | [nm] | | |
| 105 | Cl | 654 | 80 | 0,05 |
| 106 | Br | 657 | 70 | 0,04 |

Nun wurde von Monomethin- auf Trimethinverbindungen übergegangen.

Tabelle 6 zeigt die Eigenschaften von Proben 57 bis 61 und 107 bis 109, entsprechend der allgemeinen Formel III mit n = 1 und $X_1$ sowie $Y_1$ Sauerstoff. $R'_1$ und $R'_4$ sind Phenylgruppen, und zwar im Fall der Probennummer 57 unsubstituiertes Phenyl, bei den Proben 58 bis 61 und 107 bis 109 substituiertes Phenyl.

Bei den Proben 57 bis 61 sind alle anderen R′ und R″ = H; bei den Proben 107 bis 109 sind einzelne der Substituenten $R'_7$ bis $R'_{14}$ = $CH_3$, alle anderen R′ und R″ = H.

Tabelle 6

| Proben-nummer | Substitution an R'$_1$ (= Phenyl) (o) | (m) | (p) | (m) | (o) | Substitution an R'$_4$ (= Phenyl) (o) | (m) | (p) | (m) | (o) | Weitere Substituenten gemäß Formel III R'$_7$ | R'$_8$ | R'$_9$ | R'$_{10}$ | R'$_{11}$ | R'$_{12}$ | R'$_{13}$ | R'$_{14}$ | $\lambda_{max}$ [nm] | t | E(450) |
|---|---|---|---|---|---|---|---|---|---|---|---|---|---|---|---|---|---|---|---|---|---|
| 57 | | | | | | | | | | | | | | | | | | | 716 | 200 | 0,08 |
| 58 | Br | | | | | Br | | | | | | | | | | | | | 684 | 30 | 0,02 |
| 59 | Cl | | | | Cl | Cl | | | | Cl | | | | | | | | | 674 | 3 | 0,01 |
| 60 | $CH_3$ | | | | | $CH_3$ | | | | | | | | | | | | | 691 | 100 | 0,01 |
| 61 | $CH_3$ | | $CH_3$ | | $CH_3$ | $CH_3$ | | $CH_3$ | | $CH_3$ | | | | | | | | | 672 | 14 | 0,01 |
| 107 | Cl | | | | Cl | Cl | | | | Cl | $CH_3$ | | $CH_3$ | | | $CH_3$ | | $CH_3$ | 685 | 35 | 0,02 |
| 108 | Cl | | | | Cl | Cl | | | | Cl | | $CH_3$ | | | | | $CH_3$ | | 680 | 20 | 0,01 |
| 109 | $CH_3$ | | $CH_3$ | | $CH_3$ | $CH_3$ | | $CH_3$ | | $CH_3$ | $CH_3$ | | $CH_3$ | | | $CH_3$ | | $CH_3$ | 683 | 90 | 0,02 |

Ebenfalls der allgemeinen Formel III entsprechen die Farbstoffe gemäß Proben 112 und 113, mit den folgenden Strukturen:

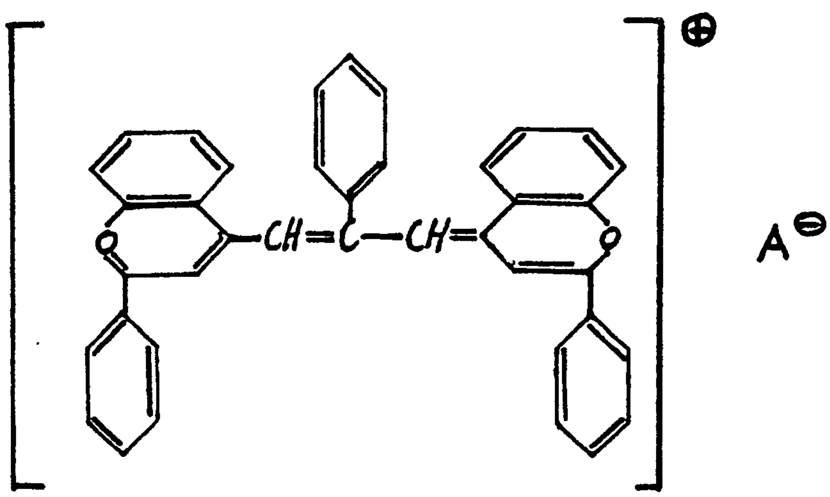

(Probe 112)

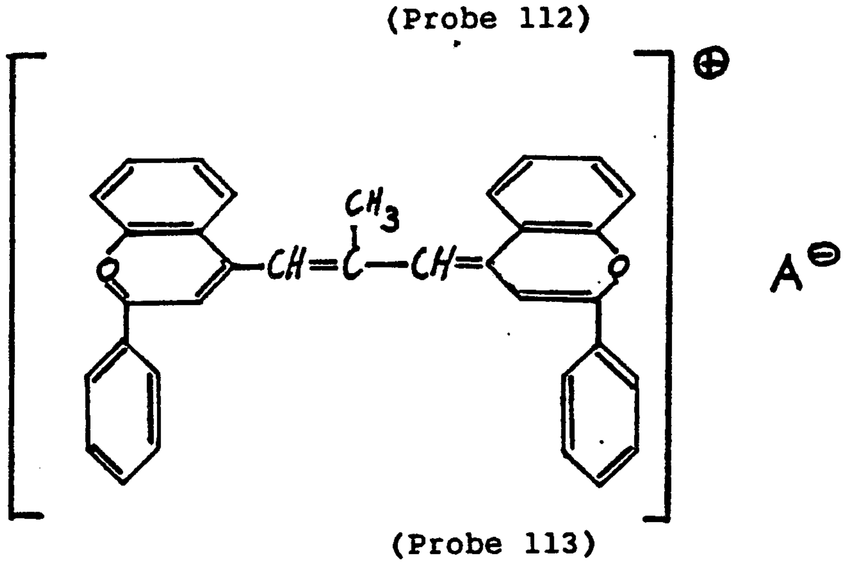

(Probe 113)

Der Farbstoff gemäß Probe 112 ist bekannt aus der eingangs genannten japanischen Patentanmeldung Nr. 27781/1982. Der Farbstoff gemäß Probe 113 unterscheidet sich von diesem bekannten Farbstoff dadurch, daß $R''_2$ Methyl statt Phenyl ist.

Probe 112 ergab max = 727 nm, t = 50 und $E_\infty$ (450) = 0,09. Probe Nr. 113 ergab $\delta max$ = 730 nm; t war größer als 500, so daß $E_\infty$ (450) nicht bestimmt wurde.

Diese Versuche zeigen, daß Farbstoffe mit $R''$ = Phenyl sich als Ausbleichfarbstoffe besser eignen als solche mit $R''$ = Alkyl. Angesichts der sich bei den vorher untersuchten Farbstoffen zeigenden Substituenteneinflüsse kann davon ausgegangen werden, daß $R''$ = substituiertes Phenyl, insbesondere ortho-halogensubstituiertes Phenyl, t-Alkyl oder Carboxyl (~derivat) gegenüber dem bekannten Farbstoff gemäß Probe 112 wesentlich bessere Eigenschaften ergibt.

Besonders auffällig sind die hervorragenden Ergebnisse der Proben 59 und 108, bei denen beide Phenylgruppen $R'_1$ und $R'_4$ in beiden ortho-Stellungen chloriert sind. Gegenüber dem durch Probe 57 gebildeten Grundkörper ist die Ausbleichzeit bei Probe 59 fast um den Faktor 70 verkürzt; der verbleibende Gelbton ist um den Faktor 8 geringer. Lehrreich ist in dieser Hinsicht eine Gegenüberstellung mit Probennummern 1 und 14 gemäß Tabelle 1.

Tabelle 7 zeigt die Ergebnisse von Proben 62 bis 64, 110 und 111. Diese Farbstoffe entsprechen wiederum der Formel III, mit n = 1 und $X_1$ sowie $Y_1$ = Sauerstoff. $R'_1$ und $R'_4$ sind bei diesen Farbstoffen keine Phenylgruppen, sondern Alkylgruppen. Bei den Proben 62 bis 64 sind alle anderen $R'$ und $R''$ = H; bei den Proben 110 und 111 sind einzelne der Substituenten $R'_7$ bis $R'_{14}$ Cl oder $CH_3$, alle verbleibenden

$R'$ und $R''$ = H. Das beste Ergebnis ergab eine Verwendung von t-Butyl als Substituenten $R'_1$ und $R'_4$ - (Probennummern 63 und 110).

Tabelle 7

| Probennummer | $R'_1$ | $R'_4$ | Weitere Substituenten gemäß Formel III | | | | | | | | λmax | t | $E_\infty(450)$ |
|---|---|---|---|---|---|---|---|---|---|---|---|---|---|
| | | | $R'_7$ | $R'_8$ | $R'_9$ | $R'_{10}$ | $R'_{11}$ | $R'_{12}$ | $R'_{13}$ | $R'_{14}$ | [nm] | | |
| 62 | i-Propyl | i-Propyl | | | | | | | | | 662 | 50 | 0,01 |
| 63 | t-Butyl | t-Butyl | | | | | | | | | 663 | 30 | 0,01 |
| 64 | I-Adamant. | I-Adamant. | | | | | | | | | 668 | 60 | 0,02 |
| 110 | t-Butyl | t-Butyl | | Cl | | Cl | Cl | | CL | | 682 | 20 | 0,01 |
| 111 | t-Butyl | t-Butyl | $CH_3$ | | $CH_3$ | | | $CH_3$ | | $CH_3$ | 673 | 70 | 0,01 |

Beim Übergang auf die durch Formel II allgemein dargestellten Strukturen - ohne die Ringbildung zwischen $R'_5$ und $R'_6$ wie gemäß Formel III - ergaben sich ganz ähnliche Ergebnisse.

Tabelle 8 zeigt die Resultate von Versuchen mit Probennummern 65 bis 78 und 114 bis 129. Diese Farbstoffe entsprechen der Formel II mit n = 0 und $X_1$ sowie $Y_1$ = Sauerstoff. $R'_1$, $R'_4$ und $R'_5$ werden von Phenylgruppen gebildet; $R'_4$ und $R'_5$ sind bei allen Proben gemäß Tabelle 8 unsubstituiert. Bei den Proben 65 bis 78 sind alle anderen $R'$ und $R''$ = H, bei den Proben 114 bis 129 sind einzelne der Substituenten $R'_7$ bis $R'_{10}$ = Cl, Br oder $CH_3$, alle weiteren $R'$ und alle $R''$ = H.

Tabelle 8

| Probennummer | Substitution an $R'_1$ (= Phenyl) | | | | | Weitere Substituenten gemäß Formel II | | | | max | t | E (450) |
|---|---|---|---|---|---|---|---|---|---|---|---|---|
| | (o) | (m) | (p) | (m) | (o) | $R'_7$ | $R'_8$ | $R'_9$ | $R'_{10}$ | [nm] | | |
| 65 | | | | | | | | | | 570 | 80 | 0,20 |
| 66 | Cl | | | | | | | | | 565 | 50 | 0,14 |
| 67 | | Cl | | | | | | | | 570 | 80 | 0,18 |
| 68 | Br | | | | | | | | | 562 | 30 | 0,12 |
| 69 | I | | | | | | | | | 562 | 30 | 0,12 |
| 70 | Cl | | Cl | | | | | | | 564 | 60 | 0,16 |
| 71 | Cl | | | Cl | | | | | | 562 | 50 | 0,15 |
| 72 | Cl | Cl | Cl | | | | | | | 559 | 50 | 0,15 |
| 73 | Cl | | | | Cl | | | | | 552 | 21 | 0,14 |
| 74 | | $CF_3$ | | | | | | | | 566 | 30 | 0,20 |
| 75 | | $CF_3$ | | $CF_3$ | | | | | | 563 | 30 | 0,18 |
| 76 | | CN | | | | | | | | 568 | 40 | 0,24 |
| 77 | $NO_2$ | | | | | | | | | 554 | 35 | 0,25 |
| 78 | $CH_3$ | | | | | | | | | 562 | 60 | 0,11 |
| 114 | | | | | | | Cl | | Cl | 574 | 50 | 0,25 |
| 115 | | | | | | Cl | Cl | | | 576 | - instabil - | |
| 116 | | | | | | Cl | | Cl | | 575 | - instabil - | |
| 117 | | | | | | Cl | Cl | Cl | | 582 | - instabil - | |
| 118 | | | | | | | | | Cl | 573 | 40 | 0,20 |
| 119 | | | | | | | Cl | | | 575 | 30 | 0,20 |
| 120 | | | | | | | Br | | | 577 | 25 | 0,16 |
| 121 | | | | | | | $CH_3$ | | $CH_3$ | 577 | 80 | 0,18 |
| 122 | Br | | | | | | Cl | | Cl | 562 | 25 | 0,15 |
| 123 | Cl | | | | | | Cl | | | 566 | 40 | 0,15 |
| 124 | Cl | | | | | | Br | | | 567 | 40 | 0,18 |
| 125 | Cl | | | | | | Br | | Br | 566 | 45 | 0,25 |
| 126 | Cl | | | | | | | | Cl | 563 | 40 | 0,15 |
| 127 | Cl | | | Cl | | | Cl | | Cl | 558 | 25 | 0,15 |
| 128 | Cl | | | | Cl | | Br | | | 553 | 17 | 0,12 |
| 129 | Cl | | | | Cl | | Cl | | Cl | 547 | 18 | 0,14 |

Die Probe Nr. 65 ist ein bekannter Farbstoff, bei dem alle Phenylgruppen unsubstituiert sind.

Die Probe Nr. 128, mit in beiden ortho-Stellungen chlorsubstituiertem Phenyl als $R'_1$, und $R'_8$ = Br ergab die kürzeste Ausbleichzeit t; gleich gute Werte hinsichtlich des verbleibenden Gelbwertes ergaben, bei jedoch längerer Ausbleichzeit, die Proben 68, 69 und 78, bei denen jeweils nur eine ortho-Stellung des $R'_1$-Phenyls substituiert war.

Die Probe Nr. 129 ergab bei ebenfalls sehr kurzer Ausbleichzeit einen praktisch genauso geringen Ausbleichrückstand, was neben dem vorteilhaften Einfluß der ortho-Chlorierung am $R'_1$-Phenyl eine günstige Wirkung der Halogenierung in $R'_8$ und $R'_{10}$ anzeigt. Dies bestätigt ein Vergleich mit Proben 122 und 127.

Die Proben 115 bis 117 waren instabil, wohl wegen $R'_7$ = Cl, vgl. Proben 90 bis 92 in Tabelle 1a.

In Tabelle 9 sind die Ergebnisse von Proben 79 bis 81 und 130 bis 142 aufgeführt; auch diese Farbstoffe entsprechen der allgemeinen Formel II mit n = 0 und $X_1$ sowie $Y_1$ = Sauerstoff.

Tabelle 9

| Probennummer | Substitution an $R'_1$ (= Phenyl) | | | | | Weitere Substituenten gemäß Formel II | | | | λmax | t | E∞(450) |
|---|---|---|---|---|---|---|---|---|---|---|---|---|
| | (o) | (m) | (p) | (m) | (o) | $R'_7$ | $R'_8$ | $R'_9$ | $R'_{10}$ | [nm] | | |
| 79 | | | | | | | | | | 536 | 135 | 0,05 |
| 80 | Br | | | | | | | | | 525 | 110 | 0,04 |
| 81 | Cl | | | | Cl | | | | | 515 | 60 | 0,03 |
| 130 | | | | | | | Cl | | | 540 | 90 | 0,05 |
| 131 | | | | | | | | | Cl | 536 | 110 | 0,09 |
| 132 | | | | | | Cl | Cl | | Cl | 539 | 110 | 0,07 |
| 133 | | | | | | Cl | | Cl | Cl | 538 | 120 | 0,08 |
| 134 | | | | | | Cl | Cl | Cl | | 542 | 125 | 0,09 |
| 135 | | | | | | | Br | | | 540 | 90 | 0,05 |
| 136 | | | | | | | $CH_3$ | | $CH_3$ | 540 | 160 | 0,05 |
| 137 | | | | | | | Cl | | Cl | 538 | 85 | 0,04 |
| 138 | Cl | | | | | | | | | 527 | 25 | 0,02 |
| 139 | $CH_3$ | | $CH_3$ | | $CH_3$ | | | | | 520 | 30 | 0,04 |
| 140 | Cl | | | | | | Cl | | | 530 | 100 | 0,03 |
| 141 | Cl | | | | | | Br | | | 530 | 100 | 0,03 |
| 142 | Cl | | | | | | | | Cl | 527 | 90 | 0,03 |
| ($R'_4$, $R'_5$ = t-Butyl) | | | | | | | | | | | | |

Beim Farbstoff Nr. 79 ist $R'_1$ unsubstituiertes Phenyl; bei den Farbstoffen 80 und 81 erfolgte eine Halogensubstitution in ortho-Stellung.

Bei Proben 79 bis 81 und 130 bis 142 sind $R'_4$ und $R'_5$ = t-Butyl. Bei den Proben 79 bis 81 und 138, 139 sind alle weiteren $R'$ und $R''$ = H. Bei Proben 130 bis 137 und 140 bis 142 sind einzelne der Substituenten $R'_7$ bis $R'_{10}$ = Cl, Br oder $CH_3$, alle weiteren $R'$ und $R''$ = H.

Besonders gute Ergebnisse zeigten die Farbstoffe Nr. 138 mit $R'_1$ = in ortho-Stellung monochloriertes Phenyl und 81 mit $R'_1$ = in beiden ortho-Stellungen chloriertes Phenyl.

Bemerkenswert ist ferner, daß der Farbstoff 139 mit in beiden ortho-Stellungen sowie in para-Stellung methyliertem Phenyl als Substituent $R'_1$ nicht wesentlich schlechter ist; außerdem fällt auf, daß die Proben 132 bis 134 trotz $R'_7$ = Cl ausreichend stabil sind.

Tabelle 9a enthält die Ergebnisse für Proben 143 bis 147. Die Farbstoffe 143 bis 146 entsprechen der Formel II mit n = 0, $X_1$, $Y_1$ = Sauerstoff, $R'_1$ = unsubstituiertes Phenyl, $R'_4$ und $R'_5$ = Isopropyl. Probe 143 ist der Grundkörper, bei dem alle weiteren $R'$ und $R''$ = H sind. Bei Proben 144 bis 146 sind einzelne der Substituenten $R'_7$ bis $R'_{10}$ Cl, Br oder $CH_3$.

Probe 147 entspricht ebenfalls der Formel II, jedoch sind $R'_1$, $R'_4$ und $R'_5$ = t-Butyl. Alle weiteren $R'$ und $R''$ = H.

Tabelle 9a

| Probennummer | Substituenten gemäß Formel II | | | | | | | λmax | t | E∞(450) |
|---|---|---|---|---|---|---|---|---|---|---|
| | $R'_1$ | $R'_4$ | $R'_5$ | $R'_7$ | $R'_8$ | $R'_9$ | $R'_{10}$ | [nm] | | |
| 143 | Phenyl | i-Propyl | i-Propyl | | | | | 534 | 145 | 0,05 |
| 144 | Phenyl | " | " | | Cl | | | 536 | 120 | 0,04 |
| 145 | Phenyl | " | " | | $CH_3$ | | $CH_3$ | 538 | 160 | 0,05 |
| 146 | Phenyl | " | " | | Br | | | 538 | 110 | 0,04 |
| 147 | t-Butyl | t-Butyl | t-Butyl | | | | | 512 | 90 | 0,04 |

Zuletzt wurden Versuche mit Farbstoffen durchgeführt, die der allgemeinen Formel IV entsprechen, wobei n = 0, $X_1$, $Y_2$ = Sauerstoff, $R'_1$ = Phenyl (Probe 82), substituiertes Phenyl (Probe 83) oder t-Butyl

(Probe 84); alle anderen R′ und R″ = H. Die Ergebnisse zeigt Tabelle 10.

Tabelle 10

| Probennummer | $R'_1$ | Substitution an $R'_1$ | | | | | λmax | t | E∞(450) |
|---|---|---|---|---|---|---|---|---|---|
| | | (o) | (m) | (p) | (m) | (o) | [nm] | | |
| 82 | Phenyl | | | | | | 606 | 30 | 0,05 |
| 83 | " | Cl | | | | Cl | 594 | 10 | 0,03 |
| 84 | t-Butyl | | | | | | 582 | 14 | 0,03 |

Gegenüber dem Farbstoff Nr. 82 mit unsubstituiertem Phenyl als Substituent $R'_1$ ergab eine Chlorsubstitution am Phenyl in beiden ortho-Stellungen eine deutliche Verbesserung (Probennummer 83). Nur unwesentlich anders war das Ergebnis für Farbstoff Nr. 84, mit t-Butyl als Substituent $R'_1$.

Insgesamt zeigt sich, daß die erfindungsgemäßen Farbstoffe in manchen Fällen nur zu einer Erhöhung der Lichtempfindlichkeit, aber nicht zu einer Verbesserung des Gelbtons führen; in anderen Fällen wird beides erreicht. Insbesondere vorteilhaft erweist sich die Einführung von Halogen-Substituenten in ortho-Stellung, wenn Phenylgruppen als Substituenten am Ring eingesetzt werden. Ebenfalls besonders vorteilhaft ist der Ersatz von Phenyl durch t-Butyl oder Carboxyl. Diese Verbesserungen sind bei den Trimethincyaninen noch auffälliger als bei den Monomethincyaninen.

Ein für das fotografische Ausbleichverfahren geeignetes Filmmaterial kann gemäß dem folgenden Beispiel hergestellt und verwendet werden, wobei bis auf den Farbstoff PS erfindungsgemäße Farbstoffe eingesetzt werden:

Beispiel 1:

In 1 l Methylglykol wurden 100 g Celluloseacetathydrogenphthalat, 40 g Polyethylenglykol (mittleres Molekulargewicht 2000) und 40 g N-Allyl-N′-(hydroxyethyl)thioharnstoff sowie 1 g Tri(p-methoxyphenyl)-pyryliumtrifluoracetat (US-Patent 3,300,314) gelöst. Dann wurden dieser Ausgangslösung 1,2 g Farbstoff gemäß Probe 38 und 1,8 g Farbstoff gemäß Probe 63 in Form der Trifluoracetate zugefügt. Die Lösung wurde mit einem Rakel auf PE-beschichtetem Papier zu einem 0,1 mm dicken Film ausgestrichen. Nach dem Verdunsten des Lösungsmittels hatte der schwarz erscheinende, lichtempfindliche Film eine Stärke von etwa 20 µm. Bei Durchlicht-Belichtung durch ein farbiges Original wurde eine farbrichtige (positive) Kopie des Originals erhalten. Anschließend wurde die Kopie mit Wasser behandelt und so lichtunempfindlich gemacht (fixiert).

Beispiele 2 bis 7:

Wie bei Beispiel 1 beschrieben wurden weitere Filme hergestellt, wobei der Ausgangslösung folgende Farbstoffe (Probennummer wie in der Beschreibung angegeben) zugesetzt wurden:

2: 0,9 g Nr. 40 und 1,8 g Nr. 58
3: 1,0 g Nr. 39 und 2,0 g Nr. 61
4: 1,5 g Nr. 62 und 1,2 g Nr. 103
5: 0,5 g Nr. 35; 0,5 g Nr 43 und 1,5 g Nr. 63
6: 0,6 g Nr. 26; 0,5 g Nr. 43 und 1,5 g Nr. 62
7: 0,5 g Nr. 35; 1,5 g Nr. 61; 0,5 g Nr. 81 und 0,5 g Nr. 103

Alle diese Filme ergaben farbrichtige Kopien.

## Ansprüche

1. Substanz entsprechend der allgemeinen Formel I

(I) 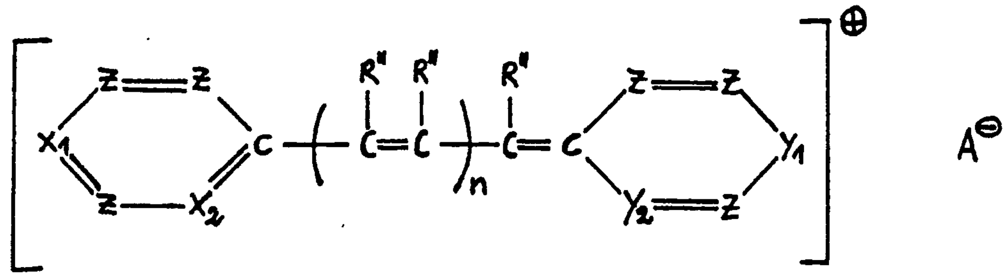

mit:

$X_1$ oder $X_2$ und $Y_1$ oder $Y_2$ = Sauerstoff, Schwefel, Selen oder Tellur, wobei das jeweils andere $X_2$ oder $X_1$ und $Y_2$ oder $Y_1$ = Z;

Z = $CR'$ oder Stickstoff;

$R'$, $R''$ = Substituent,

wobei jedes $R'$ und $R''$ unabhängig von den anderen $R'$ und $R''$ ausgewählt ist aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phosphonsäure, deren Derivate und Salze;

und wobei zwei $R'$-Gruppen am selben Ring zur Bildung eines weiteren, unsubstituierten oder substituierten alizyklischen oder aromatischen Ringes miteinander verbrückt sein können;

n = 0 oder 1;

A = Anion.

2. Substanz nach Anspruch 1,
entsprechend der allgemeinen Formel II

(II) 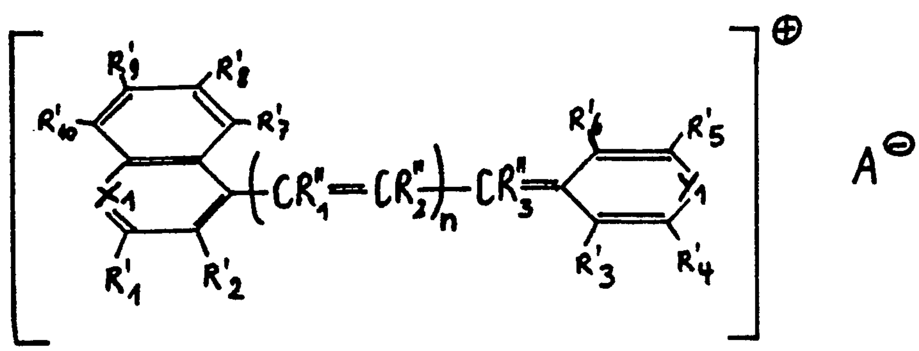

mit:

$X_1$, $Y_1$ = Sauerstoff, Schwefel, Selen oder Tellur;

wobei jeder Substituent $R'_1$ - $R'_{10}$ und $R''_1$ - $R''_3$ unabhängig von den anderen Substituenten ausgewählt ist aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phosphonsäure, deren Derivate und Salze;

und wobei zwei $R'$-Gruppen am selben Ring zur Bildung eines weiteren, unsubstituierten oder substituierten alizyklischen oder aromatischen Ringes miteinander verbrückt sein können;

n = 0 oder 1 und

A = Anion.

3. Substanz nach Anspruch 1 oder 2,
entsprechend der allgemeinen Formel III

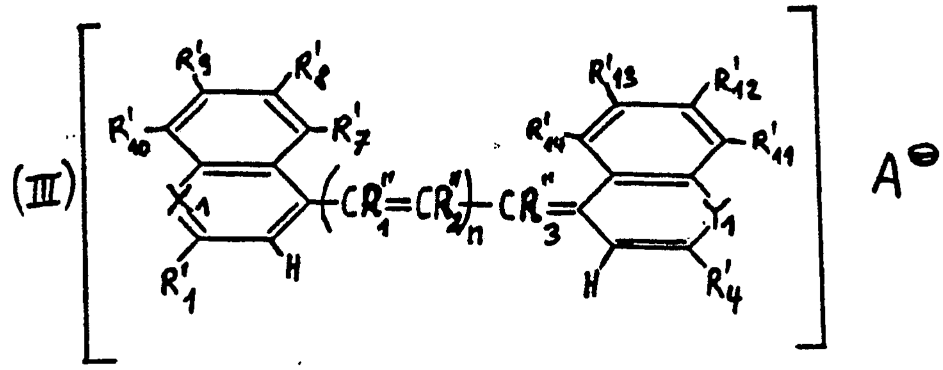

mit $X_1$, $Y_1$ = Sauerstoff, Schwefel, Selen oder Tellur;
wobei $R'_1$ und $R'_4$ unabhängig voneinander ausgewählt sind aus folgenden Gruppen: unsubstituiertes und substituiertes, einschließlich heterosubstituiertes Alkyl, ~ Cykloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phophonsäure, deren Derivate und Salze, und
$R'_7$ bis $R'_{14}$ sowie $R''_1$ bis $R''_3$ unabhängig voneinander ausgewählt sind aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; Halogen; Sulfonsäure und Phosphonsäure, deren Derivate und Salze;
n = 0 oder 1 und
A = Anion.

4. Substanz nach Anspruch 3, wobei
$R'_1$, $R'_4$ = Phenyl, substituiertes Phenyl, Alkyl, substituiertes Alkyl einschließlich halogensubstituiertes Alkyl, Carboxylsäure, Carboxylsäureester oder Carboxylsäureamid;
$R'_7$ - $R'_{14}$ = Wasserstoff, Halogen, Alkyl, substituiertes Alkyl einschließlich halogensubstituiertes Alkyl, CN, $NO_2$, und
$R''_1$ - $R''_3$ unabhängig voneinander ausgewählt sind aus folgenden Gruppen: Wasserstoff; unsubstituiertes und substituiertes, einschließlich heterosubstituiertes Alkyl, ~ Cykloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phosphonsäure, deren Derivate und Salze;
n = 0 oder 1 und
A = Anion.

5. Substanz nach Anspruch 2, wobei
$R'_1$, $R'_4$, $R'_5$ = Phenyl, substituiertes Phenyl, Alkyl, substituiertes Alkyl einschließlich halogensubstituiertes Alkyl, Carboxylsäure, Carboxylsäureester oder Carboxylsäureamid;
$R'_2$, $R'_3$ = Wasserstoff;
$R'_6$ - $R'_{10}$ = Wasserstoff, Halogen, Alkyl, substituiertes Alkyl einschließlich halogensubstituiertes Alkyl, CN, $NO_2$ und
$R''_1$ - $R''_3$ unabhängig voneinander ausgewählt sind aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phosphonsäure, deren Derivate und Salze;
n = 0 oder 1 und
A = Anion.

6. Substanz nach Anspruch 1,
entsprechend der allgemeinen Formel IV

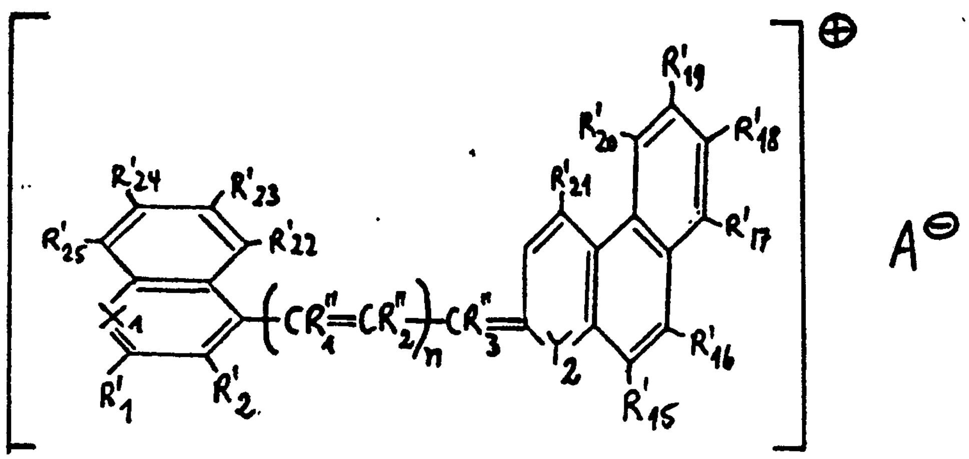

mit $X_1$, $Y_2$ = Sauerstoff, Schwefel, Selen oder Tellur,
wobei jeder Substituent $R'_1$ - $R'_{25}$ und $R''_1$ - $R''_3$ unabhängig von den anderen Substituenten ausgewählt ist aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phosphonsäure, deren Derivate und Salze;
und wobei zwei $R'$-Gruppen am selben Ring zur Bildung eines weiteren, unsubstituierten oder substituierten alizyklischen oder aromatischen Ringes miteinander verbrückt sein können;
n = 0 oder 1 und
A = Anion.

7. Substanz nach Anspruch 6, wobei
$R'_1$ = Phenyl, substituiertes Phenyl, Alkyl, substituiertes Alkyl einschließlich halogensubstituiertes Alkyl, Carboxylsäure, Carboxylsäureester oder Carboxylsäureamid;
$R'_2$ - $R'_{25}$ = Wasserstoff, Halogen, Alkyl, substituiertes Alkyl einschließlich halogensubstituiertes Alkyl, CN, $NO_2$ und $R''_1$ - $R''_3$ unabhängig voneinander ausgewählt sind aus folgenden Gruppen: Wasserstoff; unsubstituiertes und substituiertes, einschließlich heterosubstituiertes Alkyl, ~ Cycloalkyl, ~ Aryl, ~ Heteroaryl und ~ Aralkyl; Alkoxy, Aryloxy, Aralkoxy; Carboxylsäure, ~ester, ~amid und deren Salze; CN; $NO_2$; quarternisiertes substituiertes N; Halogen; Sulfonsäure und Phosphonsäure, deren Derivate und Salze;
n = 0 oder 1 und
A = Anion.

8. Substanz nach einem der Ansprüche 1 bis 7,
dadurch gekennzeichnet, daß eine oder mehrere der Gruppen $R'$ eine wenigstens in einer ortho-Stellung, ggf. zusätzlich in meta- und/oder para-Stellung durch einen elektronenziehenden Substituenten, insbesondere ein Halogenatom wie Cl oder Br, oder $CF_3$ substituierte Phenylgruppe ist bzw. sind.

9. Substanz nach einem der Ansprüche 1 bis 7,
dadurch gekennzeichnet, daß eine oder mehrere der Gruppen $R'$ eine Phenylgruppe ist bzw. sind, die in einer oder beiden meta-Stellungen einen elektronenziehenden Substituenten, insbesondere $CF_3$, CN oder $NO_2$ aufweist.

10. Substanz nach einem der Ansprüche 1 bis 7,
dadurch gekennzeichnet, daß eine oder mehrere der Gruppen $R'$ eine Phenylgruppe ist bzw. sind, die in einer oder insbesondere beiden ortho-Stellungen sowie in der para-Stellung eine Alkyl-, insbesondere eine Methylgruppe aufweist.

11. Substanz nach einem der Ansprüche 1 bis 7,
dadurch gekennzeichnet, daß eine oder mehrere der Gruppen $R'$ eine Alkylgruppe, insbesondere eine t-Butylgruppe oder eine Carboxyl-, ~ester oder ~amidgruppe ist bzw. sind.

12. Substanz nach einem der Ansprüche 1 bis 11,
dadurch gekennzeichnet, daß A in den allgemeinen Formeln I bis IV ein Anion der Reihe $Cl^-$, $Br^-$, $J^-$, $ClO_4^-$, $BF_4^-$, $PF_6^-$, $CF_3COO^-$ oder $C_3F_7COO^-$ ist.

13. Verwendung einer Substanz gemäß einem der Ansprüche 1 bis 12 als Farbstoff für fotographische Ausbleichverfahren.